# FASCICULE DE BREVET EUROPEEN

(11) **EP 0 385 869 B1**
(45) Date de publication et mention de la délivrance du brevet: **02.08.1995**
(21) Numéro de dépôt: 90400569.1
(22) Date de dépôt: 01.03.1990
(51) Int. Cl.: C04B 35/80, B32B 18/00

(54) **Procédé de fabrication d'un matériau composite à matrice céramique à ténacité améliorée**
Verfahren zur Herstellung eines Verbundmaterials mit einer keramischen Matrix von hoher Festigkeit
Process for making a composite material with a ceramic matrix having a high tenacity

(30) Priorité: 02.03.1989 FR 8902718
(43) Date de publication de la demande: 05.09.1990
(73) Titulaire: SOCIETE EUROPEENNE DE PROPULSION, 92150 Suresnes (FR)
(72) Inventeur: Heraud, Louis, F-33200 Bordeaux (FR); Naslain, Roger, F-33600 Pessac (FR); Quenisset, Jean-Michel, F-33600 Pessac (FR)
(74) Mandataire: Joly, Jean-Jacques

(56) Documents cités:
- EP-A- 172 082
- EP-A- 380 375
- EP-A- 0 121 797
- US-A- 4 580 524
- CERAMIC ENGINEERING AND SCIENCE PROCEEDINGS; PROCEEDINGS OF THE 9TH ANNUAL CONFERENCE,Cocoa Beach, Florida, 20-23 janvier 1985, vol. 6, nos. 7/8, juillet-août 1985, pages 694-706, Columbus, Ohio, US; A.J. CAPUTO et al.: "Development of a new, faster process for the fabrication of ceramic fiber-reinforced ceramic composites by chemical vapor inflitration"
- J.Mater.Sci. 24 (1989) 3756
- J.Mater.Sci. 6 (1987) 331

## Description

La présente invention concerne la fabrication des matériaux composites de type céramique-céramique, c'est-à-dire formés par une structure de renfort en fibres réfractaires densifiée par une matrice céramique.

Par structure de renfort en fibres réfractaires, on entend ici une structure bi- ou tridimensionnelle formée par des fibres essentiellement constituées par du carbone ou par un matériau céramique tel que, par exemple, le carbure de silicium, l'alumine, la zircone... La matrice céramique est mise en place au sein de la porosité de la structure de renfort par imprégnation liquide ou par infiltration chimique en phase vapeur (CVI).

Les matériaux composites de type céramique-céramique sont en particulier utilisables dans des applications exigeant des propriétés thermomécaniques élevées, notamment dans le domaine spatial. Ils présentent, par rapport aux matériaux composites de type carbone-carbone utilisés pour les mêmes applications, l'avantage d'une meilleure résistance à l'oxydation aux températures élevées.

Il est toutefois souhaitable, et c'est le but visé par la présente invention, d'améliorer certaines propriétés mécaniques des composites céramique-céramique, en particulier leur ténacité, en retardant l'initiation de l'endommagement, en réduisant la sensibilité à l'effet d'entaille, et en augmentant le travail de rupture.

Ce but est atteint grâce à un procédé de fabrication d'un matériau composite céramique-céramique, du type comprenant la formation d'une structure poreuse de renfort en fibres céramique et la densification de la structure de renfort par dépôt d'une matrice par infiltration chimique en phase vapeur au sein de la porosité de la structure de renfort, procédé selon lequel, conformément à l'invention, le dépôt de la matrice est réalisé de façon séquencée et comprend au moins deux phases d'infiltration chimique en phase vapeur d'un matériau essentiellement céramique séparées par une phase d'infiltration chimique en phase vapeur d'un matériau de moindre rigidité choisi parmi le pyrocarbone et le nitrure de bore, et les couches formées par infiltration en phase vapeur du matériau essentiellement céramique ont une épaisseur supérieure à celle des dépôts formés par infiltration en phase vapeur de pyrocarbone ou nitrure de bore. Il n'est pas utile, pour ces dernières, de dépasser une épaisseur de 2 microns.

La formation d'une matrice séquencée, ou feuilletée, avec une ou plusieurs couches interfaciales de plus faible rigidité interposées entre des couches de matériau céramique relativement rigide apporte l'effet recherché d'augmentation de la ténacité.

En effet, l'interposition d'un matériau de plus faible rigidité permet, en cas d'apparition d'une fissure dans le matériau céramique, de freiner la propagation de la fissure par déconcentration des contraintes ou de passer d'un mode de rupture au sein du matériau céramique à un autre mode, avec déconcentration de contrainte et déviation de la fissuration au sein du matériau moins rigide. L'utilisation, pour la ou les couches interfaciales de plus faible rigidité, d'un matériau choisi parmi le nitrure de bore et le pyrocarbone, notamment le pyrocarbone laminaire, est à cet égard particulièrement avantageuse en raison de la capacité de déformation élastique en cisaillement d'un tel matériau.

Ainsi, par l'interposition d'une ou plusieurs couches interfaciales de plus faible rigidité au sein de la matrice, l'amorçage de la rupture est retardé, l'énergie de rupture est augmentée, et la sensibilité du composite à l'effet d'entaille est diminuée.

De plus, la discrétisation de la matrice réalisée par le séquençage diminue la probabilité de présence de défauts susceptibles d'initier une rupture.

La formation des couches constitutives de la matrice par infiltration chimique en phase vapeur constitue une caractéristique essentielle de l'invention. Cette technique est en effet particulièrement adaptée à la réalisation de matrices séquencées, puisqu'elle permet de contrôler facilement et précisément la composition du matériau déposé en agissant sur la nature des gaz introduits dans la chambre d'infiltration et sur différents paramètres (température, pression totale, pressions partielles des espèces chimiques et débits), ce que ne permettent pas toujours d'autres techniques comme,notamment, l'imprégnation liquide.

En outre, l'infiltration chimique en phase vapeur autorise non seulement un contrôle précis de la nature des différentes couches constitutives de la matrice, mais aussi un contrôle précis des transitions entre ces couches : discontinuité brutale, avec corrélativement une brusque variation de rigidité, ou transition progressive avec modification progressive de rigidité.

Avantageusement, l'infiltration chimique en phase gazeuse est réalisée, de façon connue en soi, en mode pulsé, ce qui permet de réduire les inhomogénéités des dépôts dans les différentes couches.

Des modes particuliers de mise en oeuvre du procédé conforme à l'invention seront maintenant décrits de façon plus détaillée. On se référera aux dessins annexés qui illustrent :
- figure 1 : un schéma d'un exemple d'installation d'infiltration en phase vapeur permettant la mise en oeuvre du procédé selon l'invention ;
- figure 2 : des courbes représentant la relation entre ténacité dynamique et épaisseur d'une courbe interfaciale au sein de la matrice, pour deux matériaux composites obtenus par un procédé conforme à l'invention ; et
- figure 3 : des courbes représentant la relation entre énergie de rupture et épaisseur d'une couche interfaciale au sein de la matrice, pour deux matériaux composites obtenus par un procédé conforme à l'invention.

La mise en oeuvre d'un procédé conforme à l'invention implique, lors de la formation de la matrice du matériau composite, une alternance entre dépôt d'une couche céramique par infiltration en phase vapeur et dépôt d'une couche interfaciale en pyrocarbone (PyC) ou en nitrure de bore (BN), également par infiltration en phase vapeur.

Cette alternance peut être obtenue par infiltrations successives dans des installations distinctes.

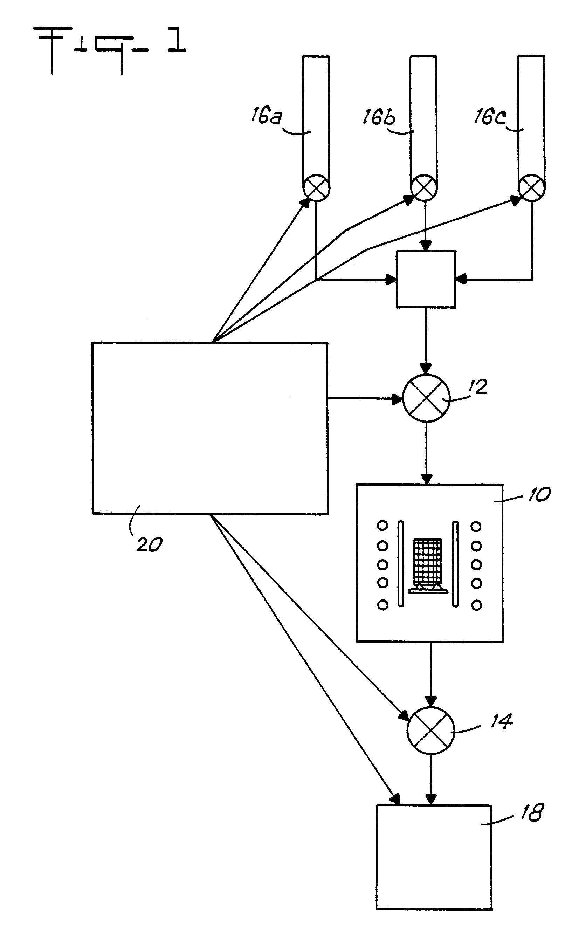

De préférence, on utilise une installation d'infiltration en phase vapeur unique fonctionnant en mode pulsé, telle que celle illustrée à titre d'exemple par la figure 1, car une telle installation permet d'obtenir avantageusement cette alternance de dépôts, en continu, sans manipulations, de façon automatique, rapide et économique. Cette installation comprend une chambre d'infiltration 10 munie d'une vanne 12 d'admission de gaz et d'une vanne 14 d'évacuation de gaz.

Au cours d'un cycle de fonctionnement de l'installation, un volume déterminé d'un gaz ou d'un mélange gazeux réactif donnant le dépôt voulu est prélevé dans un ou plusieurs réservoirs de gaz précurseurs, tels que 16a, 16b, 16c, et est admis dans la chambre 10 par ouverture de la vanne d'admission 12, la vanne d'évacuation 14 étant fermée. Le gaz ou mélange gazeux séjourne un temps déterminé dans la chambre 10, les vannes d'admission 12 et d'évacuation 14 étant fermées. La chambre 10 est ensuite vidée en ouvrant la vanne d'évacuation 14, la vanne d'admission 12 étant fermée. Les résidus gazeux sont extraits de la chambre 10 au moyen d'un circuit de pompage 18. La gestion de l'admission et de l'évacuation des gaz et de leurs résidus est assurée par une unité 20 qui commande les vannes 12, 14, le circuit de pompage 18, ainsi que des vannes de sortie des réservoirs de gaz 16a, 16b, 16c.

L'installation qui vient d'être décrite permet de déposer de façon séquentielle des couches ayant des compositions différentes, chaque couche étant formée en un ou plusieurs cycles.

Deux exemples de mise en oeuvre du procédé conforme à l'invention seront maintenant décrits de façon détaillée. Ces exemples sont relatifs à un matériau composite de type SiC-SiC, c'est-à-dire dans lequel la structure de renfort et la matrice sont essentiellement en carbure de silicium.

### Exemple 1

Une structure de renfort est réalisée par empilement de couches de tissus secs formés de fibres essentiellement en carbure de silicium telles que les fibres commercialisées sous l'appellation "Nicalon" par la société japonaise Nippon Carbon Co, les couches empilées sont maintenues dans un outillage de graphite pour former une structure fibreuse poreuse avec un taux volumique de fibres de 35 % (pourcentage du volume total occupé par les fibres égal à 35 %).

Conformément à l'invention, la structure de renfort est densifiée par une matrice séquencée déposée par infiltration chimique en phase vapeur.

A cet effet, la structure de renfort, maintenue dans son outillage, est placée dans un four d'infiltration dans lequel on établit séquentiellement les conditions nécessaires à la formation des dépôts successifs désirés.

Dans l'exemple envisagé ici, la matrice est formée par dépôts successifs d'une couche de carbure de silicium (SiC) sur les fibres de la structure de renfort, puis d'une couche interfaciale de pyrocarbone (PyC) laminaire et, enfin, d'une nouvelle couche de SiC.

Les conditions de dépôt de SiC par infiltration chimique en phase gazeuse sont bien connues. Elles sont notamment décrites dans le brevet FR 2 401 888. Le dépôt peut en particulier être obtenu au moyen d'un mélange gazeux réactif contenant du méthylchlorosilane (CH₃SiCl₃) et de l'hydrogène (H₂) à une température d'environ 900^{o}C, la pression totale dans la chambre d'infiltration étant d'environ 20 torrs et les pression partielles de CH₃SiCl₃ et de H₂ étant respectivement d'environ 5 torrs et 15 torrs.

Les conditions de dépôt de PyC laminaire sont également bien connues. Un tel dépôt peut notamment être obtenu par infiltration de gaz méthane (CH₄) sous pression réduite (environ 10 torrs) à une température d'environ 1 000°C.

Le procédé utilisé pour l'infiltration en phase vapeur du SiC et du PyC laminaire est du type pulsé et est réalisé dans une installation telle que celle de la figure 1 qui permet de déposer le SiC et le PyC laminaire de façon séquentielle.

Les transitions entre le premier dépôt SiC et le dépôt PyC laminaire et entre celui-ci et le deuxième dépôt SiC sont, dans cet exemple, réalisées de façon brutale en changeant brusquement les conditions de dépôt, à savoir nature du gaz ou mélange gazeux introduit dans la chambre, et éventuellement pression et température. On obtient de la sorte une matrice séquencée avec transition brusque de rigidité entre les couches SiC et la couche PyC laminaire.

Le premier dépôt SiC formé sur les fibres de la structure de renfort est réalisé de manière à réduire la porosité de celle-ci, initialement de 65 %, jusqu'à une valeur de 35 %. Des dépôts de PyC laminaire sont ensuite réalisés sur trois parties différentes de ce premier composite poreux avec des durées totales respectives de l'opération d'infiltration chimique en phase vapeur de 2, 12 et 24 h. Aux termes de ces infiltrations, les épaisseurs des dépôts sont respectivement sensiblement égales à 0,2 ; 1 et 2 microns. Le deuxième dépôt SiC est enfin formé sur les différentes parties en continuant l'infiltration chimique en phase vapeur jusqu'à atteindre une porosité résiduelle de 15 %.

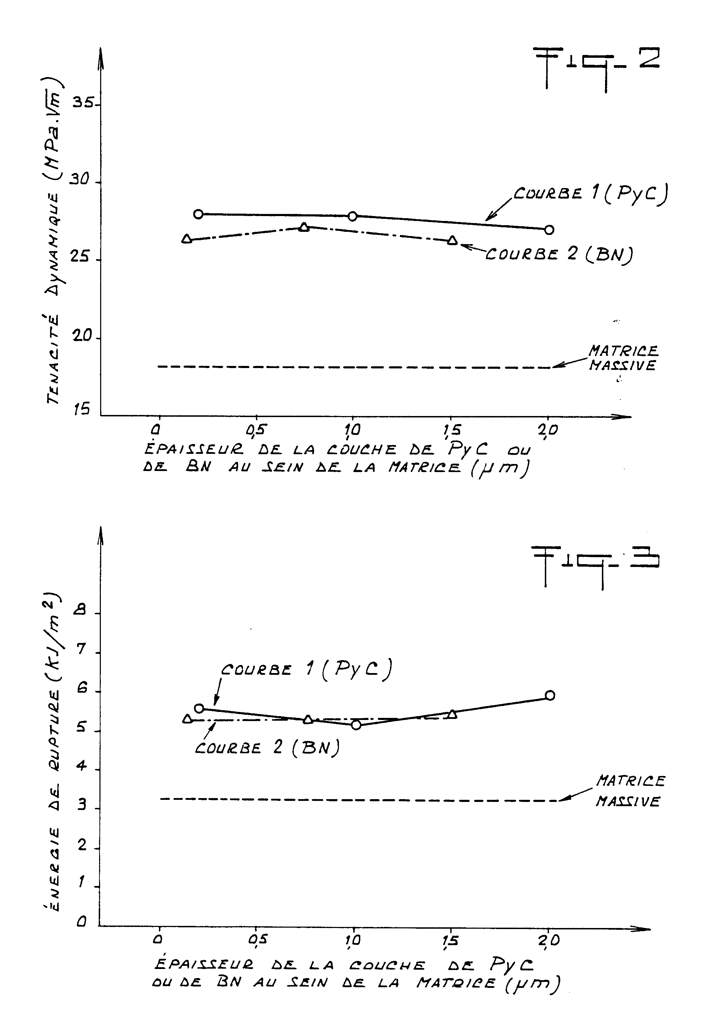

Des essais de choc au mouton Charpy conventionnel, sur éprouvettes entaillées sollicitées en flexion 3 points permettent de tracer la courbe 1 de la figure 2 donnant le facteur critique d'intensité de contrainte dynamique, encore appelé ténacité dynamique, en fonction de l'épaisseur de la couche de dépôt PyC.

A titre de comparaison, on a fait figurer la valeur obtenue avec un composite SiC-SiC réalisé comme décrit ci-dessus, à l'exception de la couche interfaciale de PyC laminaire au sein de la matrice.

On constate que la ténacité dynamique mesurée dépend peu de l'épaisseur de dépôt PyC, dans la fourchette considérée, mais que la présence de ce dépôt au sein de la matrice permet d'améliorer de façon très importante cette ténacité par rapport à celle d'un matériau composite SiC-SiC n'en possédant pas : les valeurs sont en effet voisines de 28 MPa.m^{1/2} dans le premier cas, au lieu de 18 MPa.m^{1/2} dans le second.

Ces mêmes essais permettent de calculer l'énergie de rupture globale, par intégration de la courbe force-temps. Sur la courbe 1 de la figure 3 sont reportées les énergies calculées pour les différentes valeurs de l'épaisseur de dépôt PyC au sein de la matrice et, à titre de comparaison, l'énergie calculée dans le cas d'un matériau composite SiC-SiC sans couche interfaciale au sein de la matrice.

On constate une augmentation importante de l'énergie de rupture lorsqu'une couche de PyC est interposée au sein de la matrice.

### Exemple 2

Un matériau composite de type SiC-SiC est réalisé comme décrit dans l'exemple 1 si ce n'est que la couche interfaciale de PyC laminaire est remplacée par une couche de nitrure de bore (BN) également obtenue par dépôt chimique en phase vapeur.

Des dépôts BN d'épaisseurs respectivement égales à 0,15 ; 0,75 et 1,5 micron ont été réalisés sur trois parties du premier composite de porosité 35 % par infiltrations chimiques en phase vapeur de durées respectives égales à 4, 24 et 48 h.

Comme dans l'exemple précédent, le deuxième dépôt SiC a été réalisé ensuite jusqu'à ce que chacune des parties composites aient atteint une porosité résiduelle voisine de 15 %.

Des essais au mouton Charpy ont conduit aux résultats figurant sur les courbes 2 des figures 2 et 3.

Quoique légèrement inférieures à celles obtenues dans le cas de l'exemple 1, les ténacités dynamiques des matériaux composites avec couche interfaciale BN restent très supérieures à celles des matériaux composites à matrice non séquencée.

Les énergies de rupture sont sensiblement égales à celles calculées dans le cas de l'exemple 1, donc notablement augmentée par rapport aux matériaux composites à matrice non séquencée.

Bien que l'on ait envisagé ci-avant la formation d'une matrice séquencée avec une seule couche interfaciale de plus faible rigidité entre deux couches céramiques relativement rigides, il va de soi que le nombre de couches interfaciales pourra être augmenté en alternant successivement un dépôt céramique et un dépôt PyC ou BN, le dernier dépôt étant un dépôt céramique, donnant ainsi à la matrice un caractère feuilleté plus marqué. En outre, en plus d'une ou plusieurs couches interfaciales PyC ou BN au sein de la matrice, on pourra prévoir de former une telle couche sur les fibres, avant le premier dépôt céramique, de la même manière que décrit dans le brevet FR 2 567 874.

Par ailleurs, comme déjà indiqué, la transition entre couches de natures et rigidités différentes au sein de la matrice peut être réalisée de façon brutale, comme dans l'exemple décrit plus haut, ou de façon progressive. La progressivité de la transition est réalisée en modifiant les conditions de dépôt de façon non brutale. Ainsi, si l'on se place, par exemple, dans le cas du passage d'une couche SiC à une couche PyC, une transition non brusque est obtenue en modifiant de façon progressive la composition des gaz introduits dans la chambre d'infiltration et, le cas échéant, les autres paramètres de dépôt (température, pression et débit), de sorte qu'un co-dépôt SiC + PyC est formé entre les couches.

Enfin, le procédé conforme à l'invention est bien entendu applicable à la fabrication de matériaux composites à matrice céramique autres que SiC-SiC, dans la mesure, bien entendu, où le matériau céramique de la matrice est susceptible d'être déposé par un processus d'infiltration chimique en phase vapeur.

C'est ainsi que, d'une part, les fibres de la structure de renfort peuvent être en un matériau réfractaire autre que le SiC, par exemple le carbone, la silice, l'alumine, la zircone, etc. et que, d'autre part, la matrice peut être en une matière céramique infiltrée en phase vapeur autre que le SiC, par exemple l'alumine, la zircone, un carbure ou un nitrure.

## Revendications

1. Procédé de fabrication d'un materiau composite à matrice céramique à ténacité améliorée, procédé comprenant la formation d'une structure de renfort poreuse en fibres réfractaires et la densification de la structure de renfort par dépôt d'une matrice par infiltration chimique en phase vapeur au sein de la porosité de la structure de renfort, dans lequel
le dépôt de la matrice est réalisé de façon séquencée et comprend au moins deux phases d'infiltration chimique en phase vapeur d'un matériau essentiellement céramique séparées par une phase d'infiltration chimique en phase vapeur d'un matériau de moindre rigidité choisi parmi le pyrocarbone et le nitrure de bore, et, au sein de la matrice, les dépôts formés par infiltration en phase vapeur d'un matériau essentiellement céramique ont une épaisseur supérieure à celle du ou des dépôts formés par infiltration en phase vapeur d'un matériau choisi parmi le pyrocarbone et le nitrure de bore.

2. Procédé selon la revendication 1, caractérisé en ce qu'un dépôt d'un matériau choisi parmi le pyrocarbone et le nitrure de bore est formé sur les fibres de la texture de renfort avant densification par la matrice séquencée.

3. Procédé selon l'une quelconque des revendications 1 et 2, caractérisé en ce que le ou chaque dépôt formé par infiltration en phase vapeur d'un matériau choisi parmi le pyrocarbone et le nitrure de bore a une épaisseur non supérieure à 2 microns.

4. Procédé selon l'une quelconque des revendications 1 à 3, caractérisé en ce que l'infiltration chimique en phase vapeur est réalisée par un procédé de type pulsé.

## Claims

1. Method for producing a ceramic matrix composite material having improved toughness, said method comprising the steps of forming a porous reinforcement structure from refractory fibers and densifying said reinforcement structure by depositing a matrix by chemical vapor infiltration within the porosity of the reinforcement structure, in which the matrix deposition is carried out in a sequential manner and comprises at least two phases of chemical vapor infiltration of an essentially ceramic material separated by a phase of chemical vapor infiltration of a less rigid material chosen among pyrolytic carbon and boron nitride, and, within the matrix, the layers formed by chemical vapor infiltration of an essentially ceramic material have a greater thickness than the layer or layers formed by chemical vapor infiltration of a material chosen among pyrolytic carbon and boron nitride.

2. Method according to claim 1, characterized in that a coating of material chosen among pyrolytic carbon and boron nitride is formed on said fibers of said reinforcement texture prior to densification by said sequentially formed matrix.

3. Method according to anyone of claims 1 and 2, characterized in that the or each coating or layer formed by chemical vapor infiltration of a material chosen among pyrolytic carbon and boron nitride has/have a thickness not exceeding 2 microns.

4. Method according to anyone of claims 1 to 3, characterized in that the chemical vapor infiltration is carried out by a pulsed type process.

## Patentansprüche

1. Verfahren zur Herstellung eines Verbundmaterials mit einer Keramikmatrix mit verbesserter Festigkeit, bestehend aus der Bildung einer porösen Verstärkungsstruktur aus hitzefesten Fasern und der Verdichtung der Verstärkungsstruktur durch Ablagerung einer Matrix durch chemische Infiltration in der Dampfphase innerhalb der Porosität der Verstärkungsstruktur, bei dem die Ablagerung der Matrix aufeinanderfolgend durchgeführt wird und wenigstens zwei chemische Infiltrationsphasen in der Dampfphase eines im wesentlichen keramischen Materials umfaßt, die durch eine chemische Infiltrationsphase in der Dampfphase eines Materials geringerer Festigkeit getrennt sind, das aus Pyrokohlenstoff und Bornitrid ausgewählt ist, und bei dem innerhalb der Matrix die durch Infiltration in der Dampfphase eines im wesentlichen keramischen Materials gebildeten Ablagerungen eine Dicke haben, die größer als die der Ablagerung oder der Ablagerungen durch Infiltration in der Dampfphase eines Materials sind, das aus dem Pyrokohlenstoff und dem Bornitrid ausgewählt wird.

2. Verfahren nach Anspruch 1,
**dadurch gekennzeichnet**, daß
eine Ablagerung eines Materials, das aus dem Pyrokohlenstoff und dem Bornitrid ausgewählt wird, auf den Fasern der Verstärkungsstruktur vor der Verdichtung durch die nachfolgende Matrix gebildet wird.

3. Verfahren nach Anspruch 1 oder 2,
**dadurch gekennzeichnet**, daß
die bzw. jede Ablagerung, die durch Infiltration in der Dampfphase eines Materials gebildet wird, das aus dem Pyrokohlenstoff und dem Bornitrid gewählt wird, eine Dicke hat, die nicht größer als zwei Mikron ist.

4. Verfahren nach einem der Ansprüche 1 - 3
**dadurch gekennzeichnet**, daß
die chemische Infiltration in der Dampfphase durch ein pulsierendes Verfahren erfolgt.
